# EUROPÄISCHE PATENTSCHRIFT

(11) **EP 0 772 583 B1**
(45) Veröffentlichungstag und Bekanntmachung des Hinweises auf die Patenterteilung: **03.03.1999**
(21) Anmeldenummer: 95926918.4
(22) Anmeldetag: 18.07.1995
(51) Int. Cl.: C07C 205/02, C07C 205/15, C07C 211/09, C07C 211/13, C07C 215/08, C07C 215/18, C08F 8/30, C08F 10/10, C10M 133/52, C10L 1/22

(54) **UMSETZUNGSPRODUKTE AUS POLYISOBUTENEN UND STICKOXIDEN ODER GEMISCHEN AUS STICKOXIDEN UND SAUERSTOFF UND IHRE VERWENDUNG ALS KRAFT- UND SCHMIERSTOFFADDITIVE**
REACTION PRODUCTS OF POLYISOBUTYLENES AND NITROGEN OXIDES OR MIXTURES OF NITROGEN OXIDES AND OXYGEN AND THEIR USE AS FUEL AND LUBRICANT ADDITIVES
PRODUITS DE REACTION DE POLYISOBUTENES ET D'OXYDES D'AZOTE OU DE MELANGES D'OXYDES D'AZOTE ET D'OXYGENE, ET LEUR UTILISATION EN TANT QU'ADDITIFS POUR CARBURANTS ET LUBRIFIANTS

(30) Priorität: 21.07.1994 DE 4425834
(43) Veröffentlichungstag der Anmeldung: 14.05.1997
(73) Patentinhaber: BASF AKTIENGESELLSCHAFT, 67056 Ludwigshafen (DE)
(72) Erfinder: KROPP, Rudolf, D-67117 Limburgerhof (DE); HICKMANN, Eckhard, D-67125 Dannstadt-Schauernheim (DE); EBEL, Klaus, D-68623 Lampertheim (DE); GÜNTHER, Wolfgang, D-67582 Mettenheim (DE); RATH, Hans, Peter, D-67269 Grünstadt (DE); SCHWAHN, Harald, D-69168 Wiesloch (DE)
(86) Internationale Anmeldenummer: EP9502804
(87) Internationale Veröffentlichungsnummer: WO9603367

(56) Entgegenhaltungen:
- DE-A- 1 443 380
- DE-A- 2 702 604
- FR-A- 2 687 159
- US-A- 3 510 531
- US-A- 3 576 742
- US-A- 3 681 463

## Beschreibung

Die vorliegende Erfindung betrifft Umsetzungsprodukte aus Polyisobutenen des mittleren Polymerisationsgrades P = 10 bis 100 mit einem Anteil E = 60 bis 90 % an Doppelbindungen, die mit Maleinsäureanhydrid umsetzbar sind, wobei E = 100 % dem rechnerischtheoretischen Wert für den Fall entspräche, daß jedes Molekül des Polyisobutens eine derartige reaktive Doppelbindung hätte mit Stickoxiden oder Gemischen aus Stickoxiden und Sauerstoff.

Weiterhin betrifft die Erfindung die Verwendung dieser Umsetzungsprodukte als Kraft- und Schmierstoffadditive sowie diese Umsetzungsprodukte enthaltende Kraftstoffe für Ottomotoren und Schmierstoffe.

Vergaser und Einlaßsystem von Ottomotoren, aber auch Einspritzsysteme für die Kraftstoffdosierung in Otto- und Dieselmotoren, werden durch Verunreinigungen belastet, die durch Staubteilchen aus der Luft, unverbrannte Kohlenwasserstoffreste aus dem Brennraum und die in den Vergaser geleiteten Kurbelwellengehäuseentlüftungsgase verursacht werden.

Die Rückstände verschieben das Luft-Kraftstoffverhältnis im Leerlauf und im unteren Teillastbereich, so daß das Gemisch fetter, die Verbrennung unvollständiger und wiederum die Anteile unverbrannter oder teilverbrannter Kohlenwasserstoffe im Abgas größer werden und der Benzinverbrauch steigt.

Es ist bekannt, daß zur Vermeidung dieser Nachteile Kraftstoffadditive zur Reinhaltung von Ventilen und Vergaser bzw. Einspritzsystemen verwendet werden (M. Rossenbeck in Katalysatoren, Tenside, Mineralöladditive, Hrsg. J. Falbe, U. Hasserodt, S. 223 f., G. Thieme Verlag, Stuttgart, 1978).

Je nach Wirkungsweise, aber auch nach dem bevorzugten Wirkort solcher Detergents-Additive unterscheidet man heute zwei Generationen derartiger Hilfsmittel.

Die erste Additiv-Generation konnte nur die Bildung von Ablagerungen im Ansaugsystem verhindern, nicht aber bereits vorhandene Ablagerungen wieder entfernen, wohingegen die Additive der zweiten Generation beides bewirken können ("keep-clean-" und "clean-up-Effekt") und zwar aufgrund ihrer hervorragenden Thermostabilität, insbesondere auch an Zonen höherer Temperaturen, nämlich an den Einlaßventilen. Das molekulare Bauprinzip von Kraftstoff-Detergentien kann ver

allgemeinernd abgegeben werden als Verknüpfung polarer Strukturen mit meist höhermolekularen, unpolaren oder lipophilen Resten.

Vertreter der zweiten Additiv-Generation sind oft Produkte auf der Basis von Polyisobutenen im unpolaren Molekülteil. Hier wieder sind Additive von Polyisobutylamin-Typ besonders hervorzuheben.

In der 1968 eingereichten und 1971 erteilten US-A 3 576 742 (1) werden Umsetzungsprodukte aus verzweigten langkettigen aliphatischen Olefinen, beispielsweise Polypropylen, Polyisobutylen oder Copolymeren aus Ethylen und Isobutylen, und Stickoxiden als Detergentien für Schmierstoffe beschrieben. Diese Olefine werden nach konventionellen Polymerisationsmethoden aus niederen Olefinen mit 2 bis 6 C-Atomen hergestellt. Bei den erhaltenen Nitrogruppen enthaltenden Umsetzungsprodukten sind das Vorliegen von weiteren funktionellen Gruppen wie Hydroxyl, Nitroso, Nitrat, Nitrit oder Carbonyl sowie deren relative Anteile unbekannt. Die Struktur und Zusammensetzung dieser Olefine ist somit undefiniert.

In der 1978 publizierten DE-C 27 02 604 (2) wird ein Herstellverfahren für Polyisobutene mit einem mittleren Polymerisationsgrad von 10 bis 100 beschrieben, mit dem erstmals hochreaktive Polyisobutene, d.h. solche mit überwiegend endständigen Doppelbindungen, erhalten werden. Die nach konventionellen Polymerisationsmethoden wie bei (1) hergestellten Polyisobutene weisen dagegen einen nur geringen Anteil an endständigen Doppelbindungen auf.

Die aus (1) bekannten Nitrogruppen enthaltenden Umsetzungsprodukte auf der Basis von konventionellem Polyisobuten zeigen zwar eine gewisse Wirkung als Schmierstoffadditive, jedoch ist diese Wirkung noch verbesserungsbedürftig. Weiterhin sollen die Mittel auch als Additive für Ottomotoren-Kraftstoffe einsetzbar sein.

Der vorliegenden Erfindung lag daher die Aufgabe zugrunde, Kraft- und Schmierstoffadditive mit verbesserter Wirkung bereitzustellen.

Dabei sollte insbesondere ausgehend von einem Polyolefin in einer einfachen, möglichst einstufigen Reaktion ein Polyolefin-Derivat hergestellt werden, das als Kraft- und Schmierstoffadditiv verwendet werden kann und das hauptsächlich aus Gründen der Kontrollierbarkeit und der Reproduzierbarkeit eine definierte Struktur und Zusammensetzung aufweist.

Demgemäß wurden die eingangs definierten Umsetzungsprodukte aus hochreaktiven Polyisobutenen und Stickoxiden bzw. Stickoxid-Sauerstoff-Gemischen gefunden.

Es war überraschend, daß die genannte Umsetzung der beschriebenen Polyisobutene ein Produkt ergibt, das hervorragende Eigenschaften als Kraft- und Schmierstoffadditiv besitzt, obwohl das Produkt keine basische N-Gruppe enthält. Ein Vorteil gegenüber den bisherigen zweistufigen Verfahren zur Herstellung von (aminhaltigen) Kraftstoffadditiven auf Basis von Polyolefinen ist die einfache, einstufige Darstellungsweise. Darüber hinaus war es überraschend, daß das Polyolefin vollständig abreagiert und ein Reaktionsgemisch ergibt, dessen Hauptbestandteile in ihrer chemischen Struktur und in ihrem Verhältnis genau definiert werden können.

Aus (2) ist bekannt, die beschriebenen hochreaktiven Polyisobutene, welche für die vorliegende Erfindung als Ausgangsmaterial dienen, mittels Bortrifluorid unter speziellen Reaktionsbedinguhgen herzustellen. Diese hochreaktiven Polyisobutene haben generell Bedeutung als Zwischenprodukte für Mineralölhilfsmittel. Setzt man diese Polyisobutene (man müßte sie zutreffender als Oligoisobutene bezeichnen, jedoch ist dieser Begriff im Schrifttum weniger gebräuchlich) mit Maleinsäureanhydrid um, bilden sich Additionsverbindungen, aus denen man durch Umsetzung mit Aminen hochwertige Schmieröladditive erhält.

Diese Additionsreaktion tritt praktisch allerdings nur zwischen dem Maleinsäureanhydrid und einer endständigen (α-ständigen) Doppelbindung im Polyisobuten, die vom Kettenabbruch herrührt, ein. Auch β-ständige Doppelbindungen vermögen noch bis zu einem gewissen Grade mit Maleinsäureanhydrid zu reagieren, wogegen mit innerständigen Doppelbindungen so gut wie keine Umsetzung stattfindet. Bezeichnet man den Anteil der reaktionsfähigen, überwiegend endständigen Doppelbindungen im Polyisobuten mit E, so wäre die relative Wirksamkeit W des Schmieröladditives 100 %, wenn alle theoretisch möglichen Doppelbindungen endständig wären, also E ebenfalls den Wert 100 % hätte. Dies trifft aber für die Praxis nicht zu, in der man mit konventionellen Polyisobutenen in der Regel nur Werte von E = W = 20 bis 50 % erzielt. Dementsprechend muß man größere Mengen eines derartigen Polyisobuten/Maleinsäureanhydrid-Umsetzungsgemisches anwenden, als theoretisch bei E = 100 % erforderlich wären. Das in dem Mittel vorhandene Polyisobuten, welches sich nicht mit dem Maleinsäureanhydrid umgesetzt hat, verhält sich im Mineralölhilfsmittel bestenfalls inert; größere Mengen muß man sogar entfernen.

Der mittlere Polymerisationsgrad P liegt bei 10 bis 100, vorzugsweise 15 bis 40. Wie stets bei derartigen Polymerisationen erhält man Polymere mit einem bestimmten Polymerisationsgradspektrum. Die Streuung ist jedoch im Hinblick auf die Eigenschaften der erfindungsgemäßen Umsetzungsprodukte mit Stickoxiden bzw. Stickoxid-Sauerstoff-Gemischen ohne erkennbaren Einfluß, so daß es nur auf den mittleren Polymerisationsgrad P ankommt, der beispielsweise durch Viskositätsmessungen auch während der Polymerisation laufend ermittelt und gesteuert werden kann.

In Korrelation mit dem mittleren Polymerisationsgrad P weisen die beschriebenen hochreaktiven Polyisobutene Kohlenstoffzahlen von 36 bis 400, vorzugsweise 54 bis 160 und mittlere Molekulargewichte (zahlengemittelt) von 500 bis 5600, vorzugsweise 750 bis 2250 auf.

Unter dem Begriff Polyisobutene sind als Ausgangsmaterialien für die vorliegende Erfindung nicht nur die Homopolymerisate des Isobutens, sondern auch dessen Copolymerisate mit mindestens 80 % Isobutenanteil zu verstehen. Als Comonomere kommen in erster Linie die übrigen olefinisch ungesättigten C₄-Kohlenwasserstoffe in Betracht, so daß man, was von besonderer technischer Bedeutung ist, unmittelbar von den sogenannten C₄-Schnitten ausgehen kann. Diese erhalten neben 12 bis 14 % Butanen, 40 bis 55 % Butenen und bis zu 1 % Butadien zwar nur 35 bis 45 % Isobuten, jedoch bedingt die weitgehend selektive Polymerisierbarkeit des Isobutens, daß die übrigen Monomeren unter den Polymerisationsbedingungen nur zu etwa 2 bis 20 % in das Polymere eingebaut werden. Die Monomeren, die nicht reagiert haben, können für andere Zwecke verwendet werden. Als weitere Comonomere kommen noch C₃-Monomere wie Propen sowie Ethylen oder Mischung hieraus oder mit C₄-Monomeren in Betracht. Somit sind auch Gegenstand der vorliegenden Erfindung Umsetzungsprodukte aus Polyisobutenen und Stickoxiden oder Gemischen aus Stickoxiden und Sauerstoff, bei denen die Polyisobutene bis zu 20 Gew.-% anderer C₄-Monomerer als Isobuten und/oder C₃-Monomerer und/oder Ethylen als polymerisatbildende Einheiten enthalten.

Nach diesem Verfahren erhält man Isobutene mit einem Anteil E an Doppelbindungen, die sich mit Maleinsäureanhydrid umsetzen lassen, von 60 bis 90 Prozent, in vielen Fällen von 75 bis 90 Prozent. Der rechnerisch-theoretische Wert von E = 100 % würde hiernach bedeuten, daß jedes Polyisobutenmolekül eine derart reaktionsfähige Doppelbindung enthielte. E ist in einfacher Weise und am zuverlässigsten unmittelbar aus der Säurezahl des Polyisobuten/Maleinsäureanhydrid-Adduktes zu ermitteln.

Für die Umsetzung zu den erfindungsgemäßen Produkten kommen als Stickoxide vor allem Stickstoffmonoxid (NO), Stickstoffdioxid (NO₂), Distickstofftrioxid (N₂O₃), Distickstofftetroxid (N₂O₄), Gemische dieser Stickoxide untereinander sowie Gemische dieser Stickoxide mit Sauerstoff, insbesondere NO mit Sauerstoff und NO₂ mit Sauerstoff, in Betracht. Bei Mitverwendung von Sauerstoff macht dieser im Gemisch mit den Stickoxiden 1 bis 70 Vol.-%, insbesondere 5 bis 50 Vol.-%, aus. Das Stickoxid-Sauerstoff-Gemisch kann auch noch Inertgase, z.B. Stickstoff, enthalten; dies tritt beispielsweise auf, wenn man Stickoxid-Luft-Gemische verwendet.

Die Umsetzung zu den erfindungsgemäßen Produkten kann drucklos oder unter Druck, diskontinuierlich oder kontinuierlich durchgeführt werden.

Um einen quantitativen Umsatz zu erzielen, werden die Stickoxide im Molverhältnis Polyisobutene zu Stickoxiden von 1:2 bis 1:4, vorzugsweise 1:2,2 bis 1:3,3, zugegeben. Ein größerer Überschuß schadet nicht.

Die Temperatur ist unkritisch. Sie kann im Bereich von -30°C bis 150°C variiert werden. Bevorzugt arbeitet man bei -10°C bis 100°C, insbesondere bei 25°C bis 80°C.

Die Umsetzung wird in vorteilhafter Weise in einem inerten organischen Lösungsmittel durchgeführt. Dafür eignen sich beispielsweise aliphatische Kohlenwasserstoffe wie Isooctan oder ein n-Alkan-Gemisch (z.B. C₁₀-C₁₃), chlorierte Kohlenwasserstoffe wie Methylenchlorid, Tetrachlorkohlenstoff oder Chlorbenzol, Ether wie Diethylether, Tetrahydrofuran, Dioxan oder tert.-Butylmethylether, Ester wie Essigsäureethylester oder Benzoesäuremethylester, Amide wie Dimethylformamid oder N-Methylpyrrolidon sowie Säuren wie Essigsäure. Wenn die Reaktionsprodukte als Kraftstoffadditive Verwendung finden sollen, arbeitet man zweckmäßigerweise im gleichen Lösungsmittel, in dem es auch dem Kraftstoff zugesetzt wird. Im allgemeinen betragen die Lösungsmittelmengen 50 bis 90 Gew.-% des Gesamtansatzes. Es kann aber auch ohne Lösungsmittel gearbeitet werden.

Der Zusatz einer geringen Menge Wasser (etwa 0,2 bis 1 Gew.-%, bezogen auf eingesetztes Polyisobuten), um eventuell gebildeten Nitritester zu hydrolysieren, schadet nicht.

Die Aufarbeitung eines Reaktionsansatzes geschieht meist in der Weise, daß entweder kurz im Vakuum auf 40 bis 50°C erhitzt oder mit Wasser gerührt und anschließend eine Phasentrennung vorgenommen wird. Beide Maßnahmen haben das Ziel, Reste von Stickoxiden aus dem Reaktionsgemisch zu entfernen.

In der Regel fällt das erfindungsgemäße Umsetzungsprodukt, insbesondere wenn NO₂ als Stickoxid eingesetzt oder mitverwendet wurde, in Form einer Mischung verschiedener Nitrogruppen enthaltender Alkane an, wobei diese Mischung als Hauptkomponenten die Verbindungen der Formeln I und II 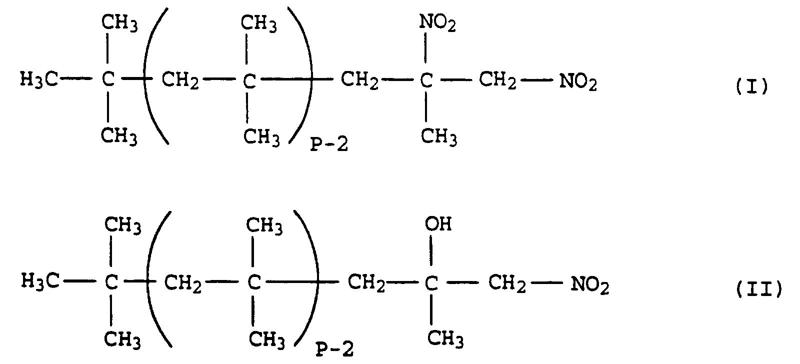 mit dem oben genannten Polymerisationsgrad P enthält.

Als weitere definierte Komponenten werden hierbei oft Verbindungen der Formeln III und IV gefunden: 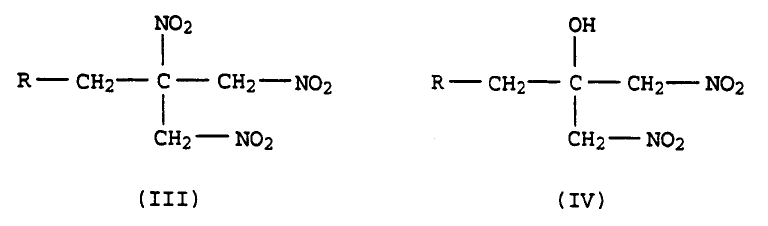 wobei R hier und im folgenden als Abkürzung für den Polyisobutyl-Rest 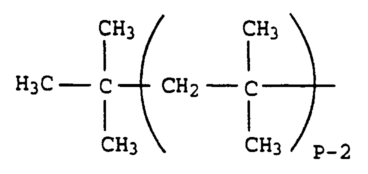 stehen soll.

Als Nebenprodukte lassen sich in einigen Fällen - je nach eingesetzten Stickoxiden oder Stickoxid-Sauerstoff-gemischen - die folgenden Verbindungen V bis VIII nachweisen:

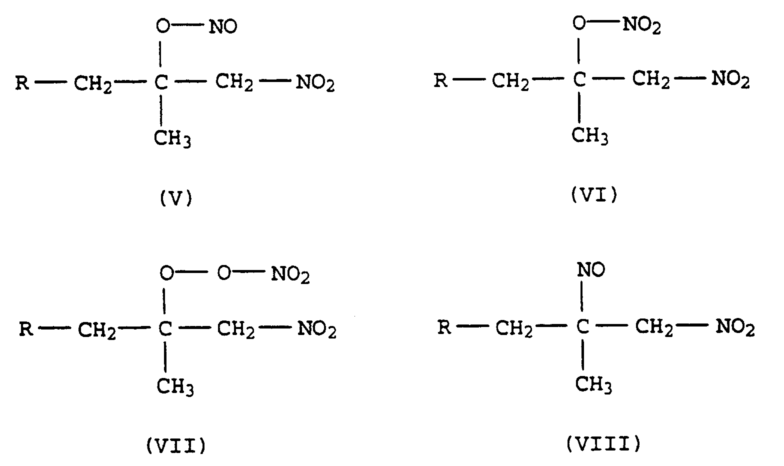

Die Verbindungen I bis IV bilden die wesentlichen Komponenten des erfindungsgmäßen Umsetzungsproduktes. Diese Mischung aus den Verbindungen I bis IV hat üblicherweise einen steil von 50 bis 90 Gew.-%, insbesondere 60 bis 85 Gew.-%, am erfindungsgmäßen Umsetzungsprodukt. Den Rest bilden im wesentlichen die Verbindungen V bis VIII sowie die zu den Verbindungen I bis VIII analogen Strukturen IX bis XI, welche auf den in geringen Mengen in den beschriebenen Polyisobutenen mit enthaltenen Polyisobutenen mit β-ständiger Doppelbindung basieren:

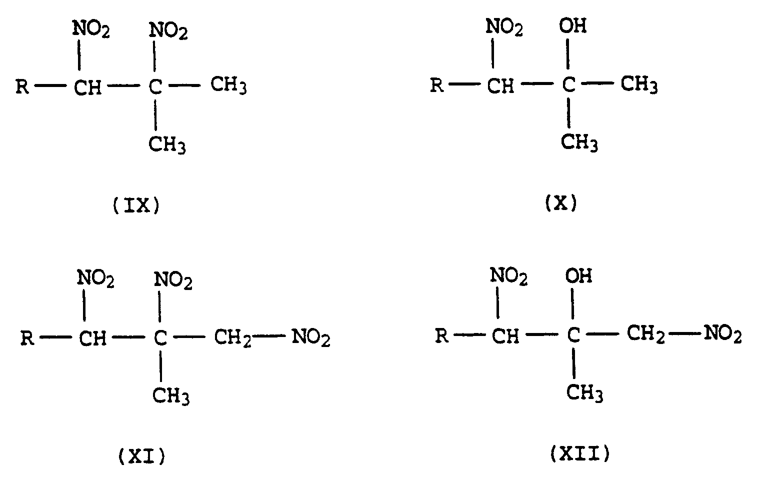

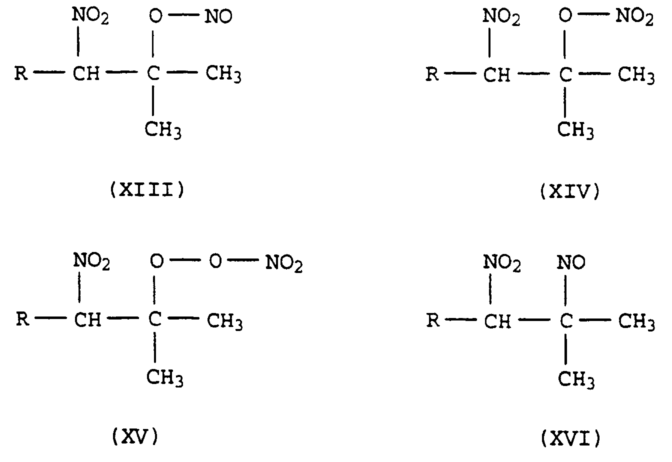

Die Verbindungen I bis IV bilden sich in der Regel in folgendem Verhältnis zueinander:
- I: 25 bis 70 Gew.-%, insbesondere 35 bis 60 Gew.-%;
- II: 3 bis 30 Gew.-%, insbesondere 5 bis 25 Gew.-%;
- III: 0 bis 30 Gew.-%, insbesondere 5 bis 25 Gew.-%;
- IV: 0 bis 25 Gew.-%, insbesondere 2 bis 15 Gew.-%;
wobei die Prozentangaben sich auf die Menge der Verbindungen I bis IV beziehen (Summe 100 Gew.-%).

Enthalten die eingesetzten Polyisobutene - wie oben erwähnt - noch andere polymerisatbildende Einheiten als Isobuten, hat der Rest R in den Strukturen III bis XVI und in analoger Weise auch der in den Formeln I und II den Rest R entsprechende Molekülteil eine dementsprechende Bedeutung.

Gegenstand der vorliegenden Erfindung sind auch Umsetzungsprodukte aus den beschriebenen hochreaktiven Polyisobutenen und Stickoxiden oder Gemischen aus Stickoxiden und Sauerstoff, welche im Anschluß an ihre Bildung durch Eliminierung mit Basen in Nitrogruppen enthaltende Alkene umgewandelt worden sind.

Als Strukturen für solche Folgeprodukte kommen insbesondere die Verbindungen XVII und XVIII 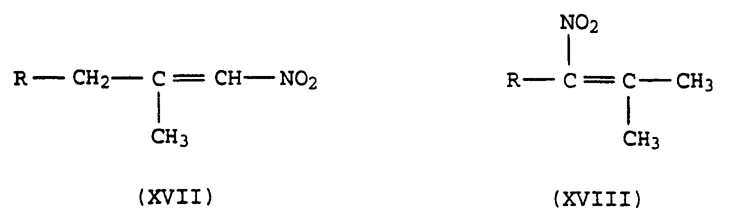 in Betracht, wobei XVII ursprünglich aus einem Polyisobuten mit endständiger Doppelbindung und XVIII ursprünglich aus einem Polyisobuten mit β-ständiger Doppelbindung entstanden ist. Auch die Hydroxylgruppen enthaltenden Verbindungen II, IV, X und XII können Nebenprodukte solcher nachgeschobenen Eliminierungsreaktionen sein. In der Regel liegt als Produkt der Eliminierungsreaktion eine Mischung verschiedener Species vor, in der XVII die Hauptkomponente bildet und XVIII nur in geringen Mengen oder gar nicht vorkommt.

Derartige Eliminierungsreaktionen werden unter den hierfür übliche Bedingungen durchgeführt. Als Basen setzt man beispielsweise Alkalimetallhydroxide wie NaOH oder KOH, Alkalimetallalkoholate wie Natriummethanolat, Natriumethanolat, Natriumisopropylat oder Kalium-tert.-butylat oder insbesondere Alkalimetallcarbonate oder -hydrogencarbonate wie Natrium- oder Kaliumcarbonat oder Natrium- oder Kaliumhydrogencarbonat ein.

Die so erhaltenen Nitrogruppen enthaltenden Alkene eignen sich als Zwischenprodukte zur Herstellung entsprechender als Kraft- und Schmierstoffadditive wirksamer Polyisobutenamine oder sind selbst als Kraft- und Schmierstoffadditive wirksam.

Die erfindungsgemäßen Umsetzungsprodukte aus Polyisobutenen und Stickoxiden oder Stickoxid-Sauerstoff-Gemischen werden aufgrund ihrer Eigenschaften als Detergentien und Dispergatoren in Kraftstoffen, insbesondere in Kraftstoffen von Ottomotoren, eingesetzt. Sie können jedoch auch in Schmierstoffen als Additive Verwendung finden.

Werden die erfindungsgemäßen Umsetzungsprodukte, die Nitroalkane darstellen, nach üblichen Methoden zu den entsprechenden Aminoalkanen hydriert, erhält man ebenfalls als Kraft- und Schmierstoffadditive wirksame Verbindungen. Derartige Aminoalkane weisen hauptsächlich die folgenden Strukturen XIX bis XXVI auf:

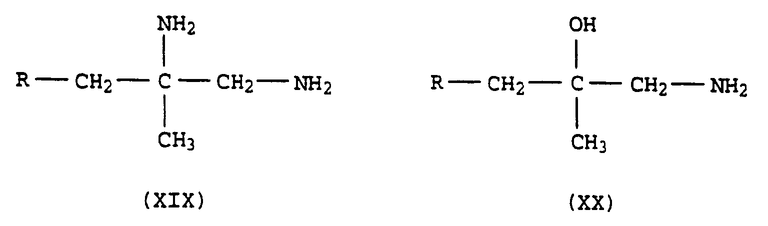

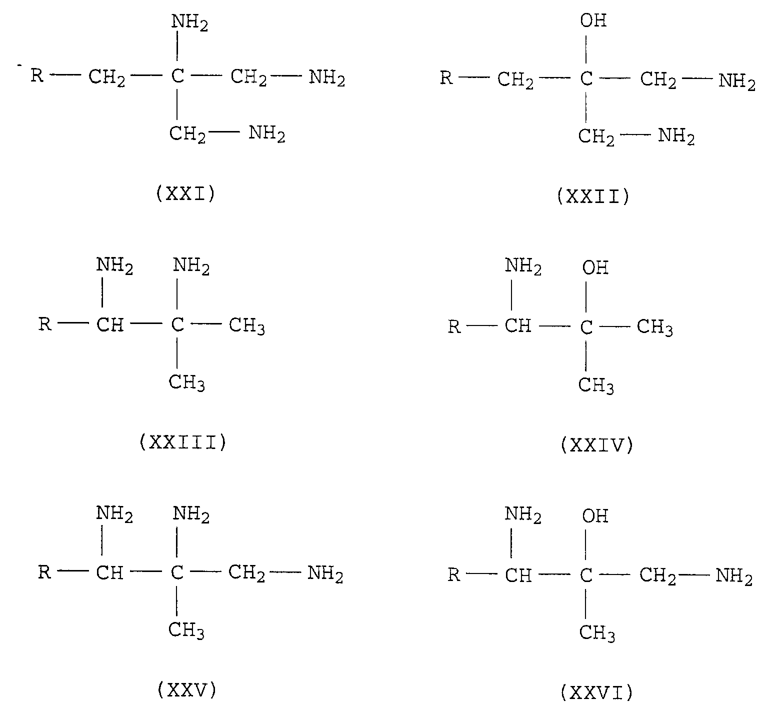

Auch aus den Folgeprodukten XVII und XVIII lassen sich entsprechende Aminoalkane der Strukturen XXVII und XXVIII herstellen:

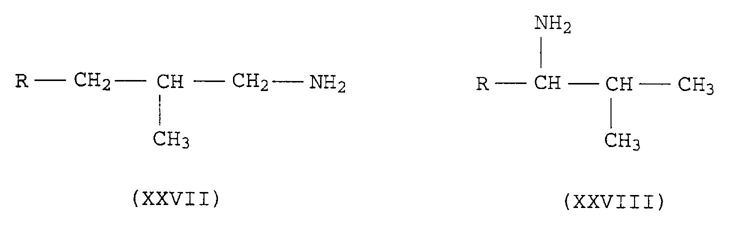

Gegenstand der vorliegenden Erfindung ist auch ein Verfahren zur Herstellung von Aminoalkanen, welches dadurch gekennzeichnet ist, daß man Umsetzungsprodukte aus Polyisobutenen und Stickoxiden oder Gemischen aus Stickoxiden und Sauerstoff im Anschluß an ihre Bildung einer Eliminierung mit Basen unterwirft und die gebildete Nitrogruppen enthaltenden Alkene danach durch Addition von Aminen oder Alkoholen und nachfolgende Hydrierung oder durch Spaltung zu Aldehyden und Addition von Aminen an diese Aldehyde und nachfolgende Hydrierung in Aminoalkane umwandelt.

Durch geeignete Funktionalisierung der Doppelbindung in XVII bzw. XVIII wie Addition von Aminen HNR¹R² oder Alkoholen R¹―OH oder Spaltung zu Aldehyden und Addition von Aminen HNR¹R² an diese Aldehyde und nachfolgende Hydrierung sind auch die folgenden Strukturen XXIX bis XXXIV zugänglich:

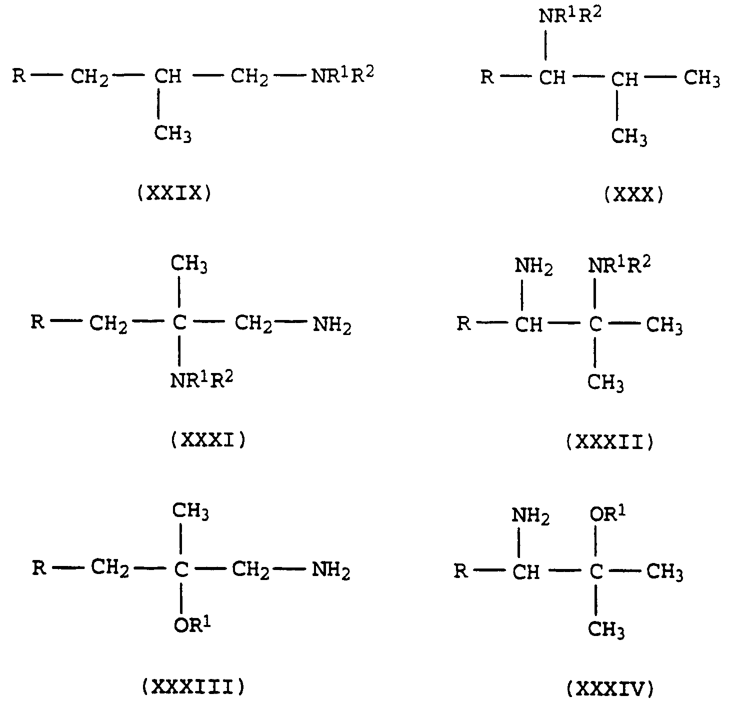

R¹ und R² bezeichnen hierbei organische Reste allgemein, wobei R² auch für Wasserstoff stehen kann. Insbesondere sind hier C₁- bis C₃₀-Alkylreste, C₂- bis C₃₀-Alkenylreste, C₅- bis C₈-Cycloalkylreste, C₇- bis C₁₈-Aralkylreste und gegebenenfalls substituierte C₆- bis C₁₄-Arylreste gemeint.

Werden die erfindungsgemäßen Umsetzungsprodukte in Kraftstoffen eingesetzt, so gibt man sie bevorzugt in einer Menge von 10 bis 5000 ppm, insbesondere 50 bis 1000 ppm zu. In Schmierstoffen muß in der Regel höher additiviert werden, die Mengen können hier 0,1 bis 6 Gew.-%, insbesondere 0,5 bis 5 Gew.-%, betragen.

Sollen in erster Linie die dispergierenden Eigenschaften der erfindungsgemäßen Stoffe genutzt werden, so kann man sie auch mit herkömmlichen Detergentien als zusätzlichen Additiven kombinieren.

Als Detergents-Komponente in der Mischung mit den erfindungsgemäßen Stoffen als Dispergatoren kann prinzipiell jedes bekannte der hierfür geeigneten Produkte eingesetzt werden, wie sie z.B. bei J. Falbe, U. Hasserodt, Katalysatoren, Tenside und Mineralöladditive, G. Thieme Verlag Stuttgart, 1978, S. 223 f., oder bei K. Owen, Gasoline and Diesel Fuel Additives, John Wiley & Sons, 1989, S. 23 ff., beschrieben sind.

Vorzugsweise verwendet man N-haltige Detergentien, z.B. Verbindungen, die eine Amin- oder Amid-Gruppe enthalten. Insbesondere geeignet sind Polyisobutylamine gemäß EP-A 0 244 616, Ethylendiamintetraessigsäureamide und/oder -imide gemäß EP-A 0 356 725, wobei auf die Definitionen in diesen Literaturstellen Bezug genommen wird. Die dort beschriebenen Produkte verfügen herstellungsbedingt ebenfalls - wie die erfindungsgemäßen Umsetzungsprodukte - über den Vorteil, chlor- bzw. chloridfrei zu sein.

Soll in erster Linie die Detergents-Wirkung der erfindungsgemäßen Umsetzungsprodukte genutzt werden, so können diese Stoffe auch mit Trägerölen kombiniert werden. Derartige Trägeröle sind bekannt, insbesondere eignen sich Trägeröle auf Polyglykolbasis, z.B. entsprechende Ether und/oder Ester, wie sie in der US-A 5 004 478 oder der DE-A 38 38 918 beschrieben sind. Auch Polyoxalkylenmonoole mit Kohlenwasserstoffendgruppen (US-A 4 877 416) oder Trägeröle, wie sie in der DE-A 41 42 241 offenbart sind, können eingesetzt werden.

Als Kraftstoffe für Ottomotoren kommen verbleites und insbesondere unverbleites Normal- und Superbenzin in Betracht. Die Benzine können auch andere Komponenten als Kohlenwasserstoffe, z.B. Alkohole wie Methanol, Ethanol oder tert.-Butanol sowie Ether, z.B. Methyl-tert.-butylether, enthalten. Neben den erfindungsgemäßen Umsetzungsprodukten enthalten die Kraftstoffe in der Regel noch weitere Zusätze wie Korrosionsinhibitoren, Stabilisatoren, Antioxidantien und/oder weitere Detergentien.

Korrosionsinhibitoren sind meist Ammoniumsalze organischer Carbonsäuren, die durch entsprechende Struktur der Ausgangsverbindungen zur Filmbildung neigen. Auch Amine zur Absenkung des pH-Wertes finden sich häufig in Korrosionsinhibitoren. Als Buntmetallkorrosionsschutz werden meist heterocyclische Aromaten eingesetzt.

Die Prüfung der Produkte auf Eignung als Kraftstoffadditive erfolgte mittels Motorentests; in Prüfstandsversuchen gemäß CEC-F-04-A-87 wurde die keep-clean-Wirkung bei Einlaßventilen (1,2 1-Opel-Kadett-Motor) getestet.

### Herstellungsbeispiele

Die Zuordnung der Strukturen I bis IV und die Berechnung des Gewichtsanteils der jeweiligen Verbindung I bis IV erfolgte mittels ¹H-NMR-Spektroskopie (Messungen in CDCl₃, Werte in ppm):
- CH₂-NO₂ in I:: 4,65 (d, 1 H); 5,20 (d, 1 H); AB-System
- CH₂-NO₂ in II:: 4,35 (d, 1 H); 4,50 (d, 1 H); AB-System
- CH₂-NO₂ in III:: 5,30 (d, 2 H); 5,42 (d, 2 H); AB-System
- CH₂-NO₂ in IV:: 4,71-4,74 (s, 4 H)

Sämtliche Prozentangaben in den Beispielen mit Ausnahme der E-Werte beziehen sich auf das Gewicht.

### Beispiel 1

In einem Rührkolben wurden 722 g hochreaktives Polyisobuten (Glissopal® ES 3250) mit einem mittleren Molgewicht von 1017 und einem Wert E von 85 % und 787 g Mihagol® M (n-Paraffin-Gemisch, C₁₀-C₁₃) gemischt. Bei einer Heizmanteltemperatur von 40°C wurden innerhalb 3 h 85 g (1,85 Mol) Stickstoffdioxid eingeleitet. Dabei stieg die Innentemperatur auf 43°C. Nach dem Strippen des überschüssigen NO₂ mit Stickstoff wurden 500 g Wasser zugesetzt und es wurde 2 h bei 50 bis 60°C gerührt. Anschließend wurde die Phasentrennung durchgeführt und die organische Schicht im Vakuum andestilliert, um Restmengen von Wasser zu entfernen.

Man erhielt 1515 g Reaktionslösung, die zu ca. 52 % aus Reaktionsprodukten bestand. Mittels präparativer Chromatographie wurde vollständiger Umsatz ermittelt. Das ¹H-NMR-Spektrum ergab eine Produktzusammensetzung von 57 % I, 23 % II, 12 % III und 8 % IV, bezogen auf die Menge von I bis IV.

Die Elementaranalyse der Produktlösung lieferte folgendes Ergebnis.
81,5 % C; 14,3 % H; 2,7 % O; 1,0 % N.

### Beispiel 2

Arbeitete man wie in Beispiel 1, behandelte jedoch das Reaktionsgemisch nicht mit Wasser, sondern erwärmte es 1 h auf 40 bis 50°C bei 1 mbar, so erhielt man 1537 g Reaktionslösung mit einer Elementaranalyse von:
81,8 % C; 13,4 % H; 2,7 % O; 1,1 % N.

Die ca. 50 % Reaktionsprodukte in der Reaktionslösung setzten sich nach dem ¹H-NMR-Spektrum wie folgt zusammen: 58 % I, 22 % II, 12 % III und 8 % IV, bezogen auf die Menge von I bis IV.

### Beispiel 3

Arbeitete man wie in Beispiel 2, setzte jedoch dem Reaktionsansatz 2,6 g Wasser zu, so erhielt man nach dem Erwärmen im Vakuum 1564 g Reaktionslösung mit einer Elementaranalyse von:
81,8 % C; 14,2 % H; 2,7 % O; 1,5 % N.

Nach der ¹H-NMR-Analyse besaß das Reaktionsprodukt eine Zusammensetzung von: 55 % I, 24 % II, 13 % III und 8 % IV, bezogen auf die Menge von I bis IV.

### Beispiel 4

200 g des hochreaktiven Polyisobutens aus Beispiel 1 und 225 g tert.-Butyl-methyl-ether wurden in einer Rührapparatur bei 60°C innerhalb 2 h mit 30 g Stickstoffdioxid behandelt. Nach dem Abkühlen wurde mit Stickstoff überschüssiges NO₂ ausgetrieben und die Reaktionslösung mit 120 g Wasser 3 h bei 60°C gerührt. Nach der Phasentrennung wurde aus der organischen Phase im Vakuum das Lösungsmittel abdestilliert. Es verblieben 218 g Reaktionsprodukt mit einer Elemtaranalyse von: 79,1 % C, 13,0 % H; 5,2 % O; 2,1 % N.

Das ¹H-NMR-Spektrum zeigt folgende Zusammensetzung: 59 % I, 22 % II, 12 % III und 7 % IV, bezogen auf die Menge von I bis IV.

### Beispiel 5

Man arbeitete wie in Beispiel 4, jedoch wurde das Stickstoffdioxid bei -8°C bis -5°C eingeleitet. Man erhielt 215 g Produkt.

Das ¹H-NMR-Spektrum ergab folgende Zusammensetzung: 52 % I, 21 % II, 18 % III und 9 % IV, bezogen auf die Menge von I bis IV.

### Beispiel 6

200 g des hochreaktiven Polyisobutens aus Beispiel 1 und 225 g tert.-Butyl-methyl-ether wurden in einer Rührapparatur bei 0°C innerhalb 2 h mit 17,1 g Stickstoffmonoxid, dem in Volumenverhältnis 1:1 Luft zugemischt wurde, behandelt. Nach 3stündigem Nachrühren bei 20°C wurde das Gemisch mit 150 g Wasser versetzt und 3 h auf 50 bis 60°C erwärmt. Anschließend wurde abgekühlt, die Phasentrennung vorgenommen und aus der organischen Phase das Lösungsmittel abdestilliert. Es verblieben 218 g Rückstand, der nach ¹H-NMR 42 % I, 10 % II, 8 % III und 4 % IV, bezogen auf die Gesamtmenge des Rückstandes, enthielt.

### Beispiel 7 (zum Vergleich)

In einem Rührkolben wurden 720 g Polyisobuten mit nur geringem Anteil an endständigen Doppelbindungen (Indopol® H 100; mittleres Molgewicht 930; Bromzahl 22,4; E = 10 %) und 820 g Mihagol® M (n-Paraffin-Gemisch, C₁₀-C₁₃) gerührt und bei 40°C innerhalb 4 h mit 115 g Stickstoffdioxid behandelt. Nach dem Strippen des überschüssigen Stickstoffdioxids mit Stickstoff wurde das Reaktionsprodukt mit 350 g Wasser versetzt und 3 h bei 60°C gerührt. Nach der Phasentrennung wurde nochmals mit Wasser gerührt und anschließend die organische Phase in Vakuum kurz andestilliert. Man erhielt 1570 g Produkt als klare Lösung. Mittels präparativer Chromatographie wurde ein Umsatz des eingesetzten Polyisobutens von 94 % ermittelt.

Die Elementaranalyse zeigte folgendes Ergebnis:
81 % C; 14,1 % H; 3,0 % O; 1,2 % N.

Wurde die Reaktion in tert.-Butyl-methyl-ether ausgeführt und nach der Aufarbeitung das Lösungsmittel abdestilliert, dann zeigte das losungsmittelfreie Produkt folgende Analyse:
80,0 % C; 13,4 % H; 4,7 % O; 2 % N.

Die ¹H-NMR-Spektren lieferten bei 4,2 bis 5,4 ppm ein nichtstrukturiertes Multiplett, dem keine definierten Strukturen zugeordnet werden konnten.

### Beispiel 8

Aus Beispiel 4 wurden 400 g Reaktionslösung vor dem Abdampfen des Lösungsmittels tert.-Butyl-methyl-ether mit 600 g Wasser und 20 g Natriumcarbonat 20 h bei 25°C gerührt. Zwecks besserer Phasentrennung wurde das Reaktionsgemisch mit 140 g 10 %iger Salzsäure versetzt und anschließend die organische Oberphase abgetrennt und eingeengt. Es verblieben 197 g Reaktionsprodukt mit einer Elementaranalyse von: 81,6 % C; 13,5 % H; 3,3 % O; 1,3 % N.

Das ¹H-NMR-Spektrum zeigt neben Resten von Verbindung II hauptsächlich Verbindung XVII in cis- und trans-Form; erkennbar an 2 Singuletts bei 6,9 und 7 ppm.

### Anwendungsbeispiele

### Keep-clean-test bei Einlaßventilen

Die Motorversuche wurden mit einem Opel-Kadett 1,2 1-Motor (nach CEC-F-04-A-87) durchgeführt. Eingesetzter Kraftstoff: Euro-Super bleifrei Dosierung des Additivs: jeweils 200 ppm

| Beispiel Nr. | Additiv aus Beispiel Nr. | Einlaßventilablagerungen [mg] *) | | | | |
|---|---|---|---|---|---|---|
| | | | Ventil 1 | Ventil 2 | Ventil 3 | Ventil 4 |
| 9 | 4 | | 4 (210) | 0 (150) | 0 (154) | 1 (200) |
| 10 | 1 | | 3 (277) | 3 (175) | 6 (183) | 5 (337) |
| 11 | 2 | | 1 (277) | 1 (175) | 0 (183) | 3 (337) |

| | | | | | | |
|---|---|---|---|---|---|---|
| *) Werte ohne Additiv (Blindversuch) in Klammern | | | | | | |

Die Ergebnisse zeigen deutlich die ventilreinigende Wirkung der erfindungsgemäßen Additive.

## Patentansprüche

1. Umsetzungsprodukte aus Polyisobutenen des mittleren Polymerisationsgrades P = 10 bis 100 mit einem Anteil E = 60 bis 90 % an Doppelbindungen, die mit Maleinsäureanhydrid umsetzbar sind, wobei E = 100 % dem rechnerisch-theoretischen Wert für den Fall entspräche, daß jedes Molekül des Polyisobutens eine derartige reaktive Doppelbindung hätte, mit Stickoxiden oder Gemischen aus Stickoxiden und Sauerstoff.

2. Umsetzungsprodukte aus Polyisobutenen und Stickoxiden oder Gemischen aus Stickoxiden und Sauerstoff nach Anspruch 1, wobei die Polyisobutene bis zu 20 Gew.-% anderer C₄-Monomerer als Isobuten und/oder C₃-Monomerer und/oder Ethylen als polymerisatbildende Einheiten enthalten.

3. Umsetzungsprodukte aus Polyisobutenen und Stickoxiden oder Gemischen aus Stickoxiden und Sauerstoff nach Anspruch 1 oder 2 in Form einer Mischung verschiedener Nitrogruppen enthaltender Alkane, wobei diese Mischung als Hauptkomponenten die Verbindungen der Formeln I und II 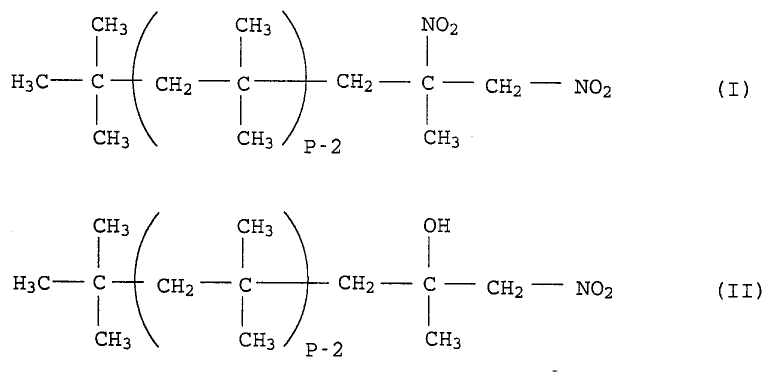 mit dem in Anspruch 1 genannten Polymerisationsgrad P enthält.

4. Verfahren zur Herstellung von Umsetzungsprodukten aus Polyisobutenen des mittleren Polymerisationsgrades P = 10 bis 100 mit einem Anteil E = 60 bis 90 % an Doppelbindungen, die mit Maleinsäureanhydrid umsetzbar sind, wobei E = 100 % dem rechnerisch-theoretischen Wert für den Fall entspräche, daß jedes Molekül des Polyisobutens eine derartige reaktive Doppelbindung hätte, mit Stickoxiden oder Gemischen aus Stickoxiden und Sauerstoff, dadurch gekennzeichnet, daß man die beschriebenen Polyisobutene mit den Stickoxiden bei Temperaturen von -30 bis 150°C umsetzt.

5. Verfahren zur Herstellung von Umsetzungsprodukten aus Polyisobutenen und Stickoxiden oder Gemischen aus Stickoxiden und Sauerstoff nach Anspruch 4, dadurch gekennzeichnet, daß man die Polyisobutene mit den Stickoxiden im Molverhältnis von 1:2 bis 1:4 umsetzt.

6. Umsetzungsprodukte aus Polyisobutenen und Stickoxiden oder Gemischen aus Stickoxiden und Sauerstoff nach Anspruch 1 oder 2, welche im Anschluß an ihre Bildung durch Eliminierung mit Basen in Nitrogruppen enthaltende Alkene umgewandelt worden sind.

7. Umsetzungsprodukte aus Polyisobutenen und Stickoxiden oder Gemischen aus Stickoxiden und Sauerstoff nach Anspruch 1 oder 2, welche im Anschluß an ihre Bildung durch Eliminierung mit Basen in Nitrogruppen enthaltende Alkene umgewandelt worden sind, welche hauptsächlich die Strukturen XVII und/oder XVIII 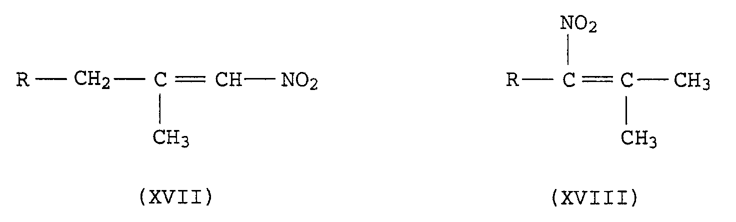 in denen R für den Polyisobutyl-Rest der Formel 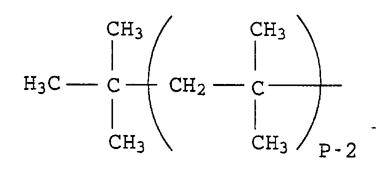 mit dem in Anspruch 1 genannten Polymerisationsgrad P steht, aufweisen.

8. Verfahren zur Herstellung von Nitrogruppen enthaltenden Alkenen, dadurch gekennzeichnet, daß man Umsetzungsprodukte aus Polyisobutenen und Stickoxiden oder Gemischen aus Stickoxiden und Sauerstoff gemäß Anspruch 1 oder 2 im Anschluß an ihre Bildung einer Eliminierung mit Basen unterwirft.

9. Umsetzungsprodukte aus Polyisobutenen und Stickoxiden oder Gemischen aus Stickoxiden und Sauerstoff nach Anspruch 1 oder 2, welche im Anschluß an ihre Bildung durch Hydrierung in Aminoalkane umgewandelt worden sind.

10. Umsetzungsprodukte aus Polyisobutenen und Stickoxiden oder Gemischen aus Stickoxiden und Sauerstoff nach Anspruch 1 oder 2, welche im Anschluß an ihre Bildung durch Hydrierung hauptsächlich in eines oder mehrere Aminoalkane der Strukturen XIX bis XXVI 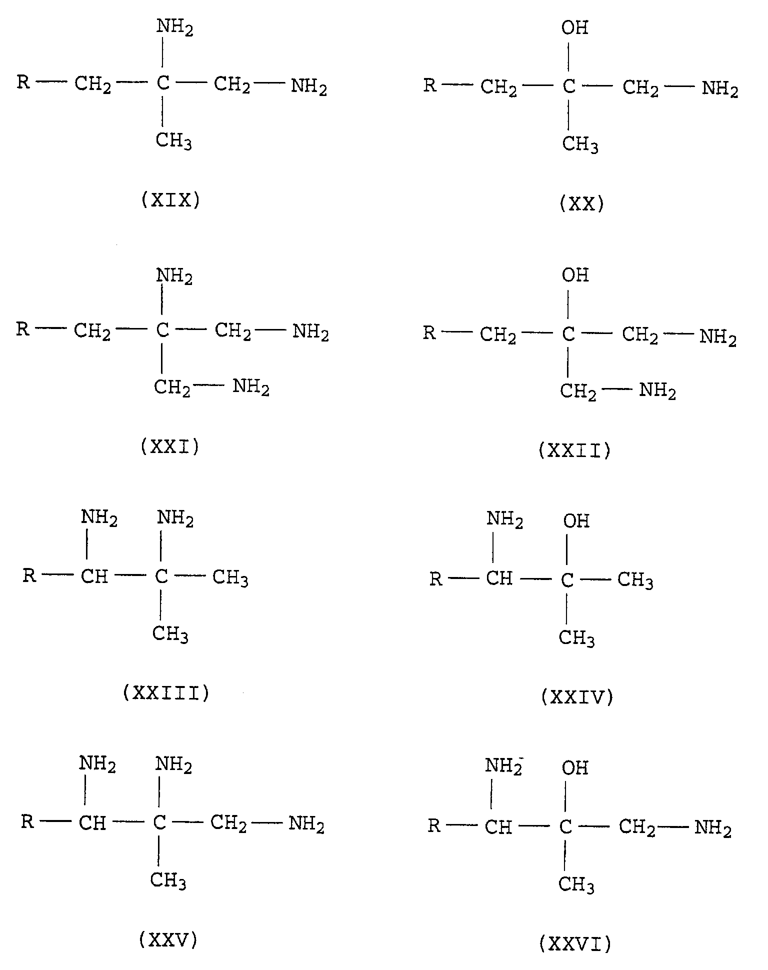 in denen R für den Polyisobutyl-Rest der Formel 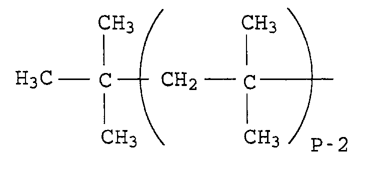 mit dem in Anspruch 1 genannten Polymerisationsgrad P steht, umgewandelt worden sind.

11. Verfahren zur Herstellung von Aminoalkanen, dadurch gekennzeichnet, daß man Umsetzungsprodukte aus Polyisobutenen und Stickoxiden oder Gemischen aus Stickoxiden und Sauerstoff gemäß Anspruch 1 oder 2 im Anschluß an ihre Bildung hydriert.

12. Umsetzungsprodukte aus Polyisobutenen und Stickoxiden oder Gemischen aus Stickoxiden und Sauerstoff nach Anspruch 1 oder 2, welche im Anschluß an ihre Bildung durch Eliminierung mit Basen in Nitrogruppen enthaltende Alkene und danach durch Hydrierung in Aminoalkane umgewandelt worden sind.

13. Umsetzungsprodukte aus Polyisobutenen und Stickoxiden oder Gemischen aus Stickoxiden und Sauerstoff nach Anspruch 1 oder 2, welche im Anschluß an ihre Bildung durch Eliminierung mit Basen in Nitrogruppen enthaltende Alkene und danach durch Hydrierung hauptsächlich in Aminoalkane der Strukturen XXVII und/oder XXVIII 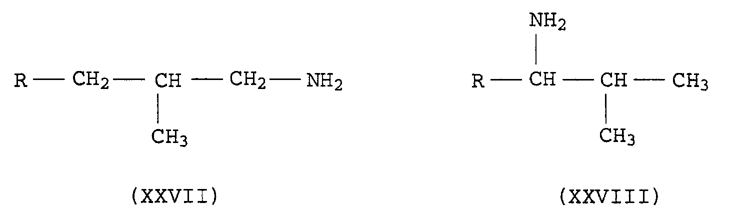 in denen R für den Polyisobutyl-Rest der Formel 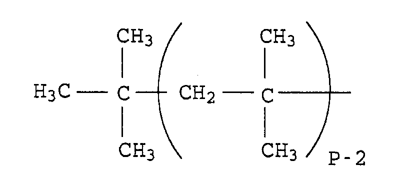 mit dem in Anspruch 1 genannten Polymerisationsgrad P steht, umgewandelt worden sind.

14. Verfahren zur Herstellung von Aminoalkanen, dadurch gekennzeichnet, daß man Umsetzungsprodukte aus Polyisobutenen und Stickoxiden oder Gemischen aus Stickoxiden und Sauerstoff nach Anspruch 1 oder 2 im Anschluß an ihre Bildung einer Eliminierung mit Basen unterwirft und die gebildeten Nitrogruppen enthaltenden Alkene danach hydriert.

15. Umsetzungsprodukte aus Polyisobutenen und Stickoxiden oder Gemischen aus Stickoxiden und Sauerstoff nach Anspruch 1 oder 2, welche im Anschluß an ihre Bildung durch Eliminierung mit Basen in Nitrogruppen enthaltende Alkene und danach durch Addition von Aminen oder Alkoholen und nachfolgende Hydrierung oder durch Spaltung zu Aldehyden und Addition von Aminen an diese Aldehyde und nachfolgende Hydrierung in Aminoalkane umgewandelt worden sind.

16. Umsetzungsprodukte aus Polyisobutenen und Stickoxiden oder Gemischen aus Stickoxiden und Sauerstoff nach Anspruch 1 oder 2, welche im Anschluß an ihre Bildung durch Eliminierung mit Basen in Nitrogruppen enthaltende Alkene und danach durch Addition von Aminen der Formel HNR¹R² oder Alkoholen der Formel R¹―OH und nachfolgende Hydrierung der durch Spaltung zu Aldehyden und Addition von Aminen der Formel HNR¹R² an diese Aldehyde und nachfolgende Hydrierung in Aminoalkane umgewandelt worden sind, welche hauptsächlich eine oder mehrere der Strukturen XXIX bis XXXIV 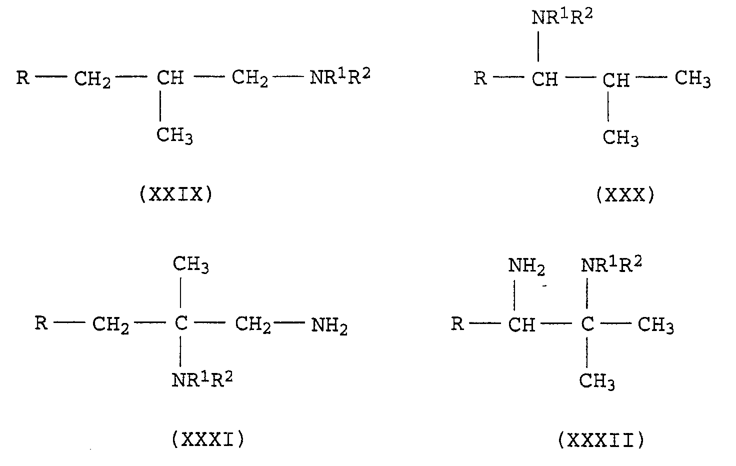 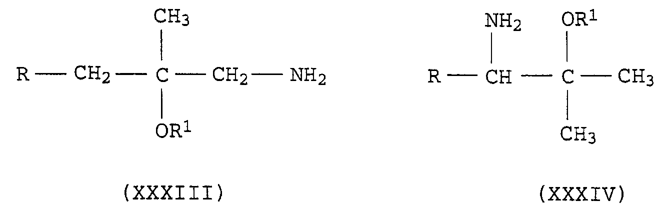 in denen R für den Polyisobutyl-Rest der Formel 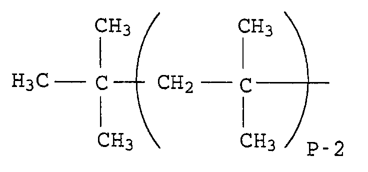 mit dem in Anspruch 1 genannten Polymerisationsgrad P steht sowie R¹ und R² C₁- bis C₃₀-Alkylreste, C₂- bis C₃₀-Alkenylreste, C₅- bis C₈-Cycloalkylreste, C₇- bis C₁₈-Aralkylreste oder gegebenenfalls substituierte C₆- bis C₁₄-Arylreste bezeichnen, wobei R² auch für Wasserstoff stehen kann, aufweisen.

17. Verfahren zur Herstellung von Aminoalkanen, dadurch gekennzeichnet, daß man Umsetzungsprodukte aus Polyisobutenen und Stickoxiden oder Gemischen aus Stickoxiden und Sauerstoff nach Anspruch 1 oder 2 im Anschluß an ihre Bildung einer Eliminierung mit Basen unterwirft und die gebildeten Nitrogruppen enthaltenden Alkene danach durch Addition von Aminen oder Alkoholen und nachfolgende Hydrierung oder durch Spaltung zu Aldehyden und Addition von Aminen an diese Aldehyde und nachfolgende Hydrierung in Aminoalkane umwandelt.

18. Verwendung von Umsetzungsprodukten aus Polyisobutenen und Stickoxiden oder Gemischen aus Stickoxiden und Sauerstoff gemäß den Ansprüchen 1 bis 17 als Additive für Kraft- und Schmierstoffe.

19. Kraftstoffe für Ottomotoren, enthaltend wirksame Mengen von Umsetzungsprodukten aus Polyisobutenen und Stickoxiden oder Gemischen aus Stickoxiden und Sauerstoff gemäß den Ansprüchen 1 bis 17.

20. Schmierstoffe, enthaltend wirksame Mengen von Umsetzungsprodukten aus Polyisobutenen und Stickoxiden oder Gemischen aus Stickoxiden und Sauerstoff gemäß den Ansprüchen 1 bis 17.

## Claims

1. A reaction product of a polyisobutene having an average degree of polymerization P of from 10 to 100 and a content E of from 60 to 90% of double bonds which can react with maleic anhydride, E = 100% corresponding to the theoretical value for the case where each molecule of the polyisobutene has such a reactive double bond, with oxides of nitrogen or mixtures of oxides of nitrogen and oxygen.

2. A reaction product of a polyisobutene and oxides of nitrogen or mixtures of oxides of nitrogen and oxygen as claimed in claim 1, the polyisobutene containing up to 20% by weight of C₄ monomers other than isobutene or C₃ monomers or ethylene as polymer-forming units.

3. A reaction product of a polyisobutene and oxides of nitrogen or mixtures of oxides of nitrogen and oxygen as claimed in claim 1 or 2 in the form of a mixture of different nitro-containing alkanes, this mixture containing, as main components, the compounds of the formulae I and II 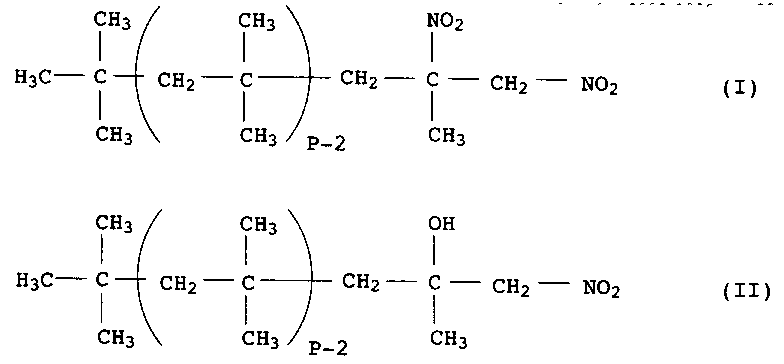 having the degree of polymerization P mentioned in claim 1.

4. A process for the preparation of a reaction product of a polyisobutene having an average degree of polymerisation P of from 10 to 100 and a content E of from 60 to 90% of double bonds which can react with maleic anhydride, E = 100% corresponding to the theoretical value for the case where each molecule of the polyisobutene has such a reactive double bond, with oxides of nitrogen or mixtures of oxides of nitrogen and oxygen, wherein the polyisobutene described is reacted with the oxides of nitrogen at from -30 to 150°C.

5. A process for the preparation of a reaction product of a polyisobutene and oxides of nitrogen or mixtures of oxides of nitrogen and oxygen as claimed in claim 4, wherein the polyisobutene is reacted with the oxides of nitrogen in a molar ratio of from 1:2 to 1:4.

6. A reaction product of a polyisobutene and oxides of nitrogen or mixtures of oxides of nitrogen and oxygen as claimed in claim 1 or 2, which, after its formation, has been converted by elimination with bases into nitro-containing alkenes.

7. A reaction product of a polyisobutene and oxides of nitrogen or mixtures of oxides of nitrogen and oxygen as claimed in claim 1 or 2, which, after its formation, has been converted by elimination with bases into nitro-containing alkenes, which mainly have the structures XVII and/or XVIII 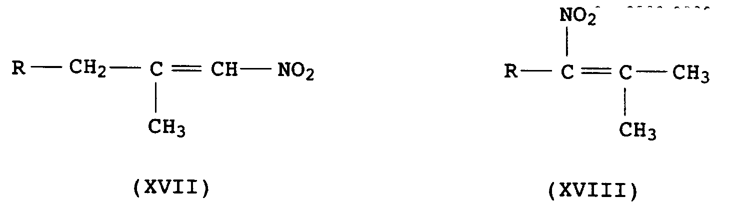 where R is polyisobutyl of the formula 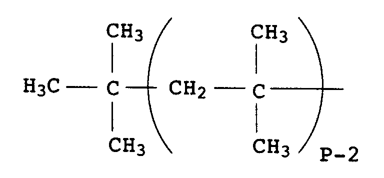 having the degree of polymerization P mentioned in claim 1.

8. A process for the preparation of a nitro-containing alkene, which comprises subjecting a reaction product of a polyisobutene and oxides of nitrogen or mixtures of oxides of nitrogen and oxygen as claimed in claim 1 or 2 after its formation to elimination with bases.

9. A reaction product of a polyisobutene and oxides of nitrogen or mixtures of oxides of nitrogen and oxygen as claimed in claim 1 or 2, which, after its formation, has been converted by hydrogenation into aminoalkanes.

10. A reaction product of a polyisobutene and oxides of nitrogen or mixtures of oxides of nitrogen and oxygen as claimed in claim 1 or 2, which, after its formation, has been converted by hydrogenation mainly into one or more aminoalkanes of the structures XIX to XXVI 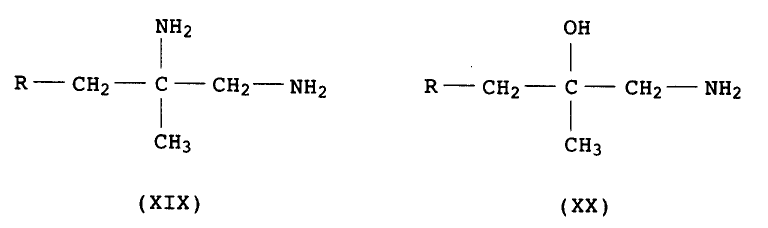 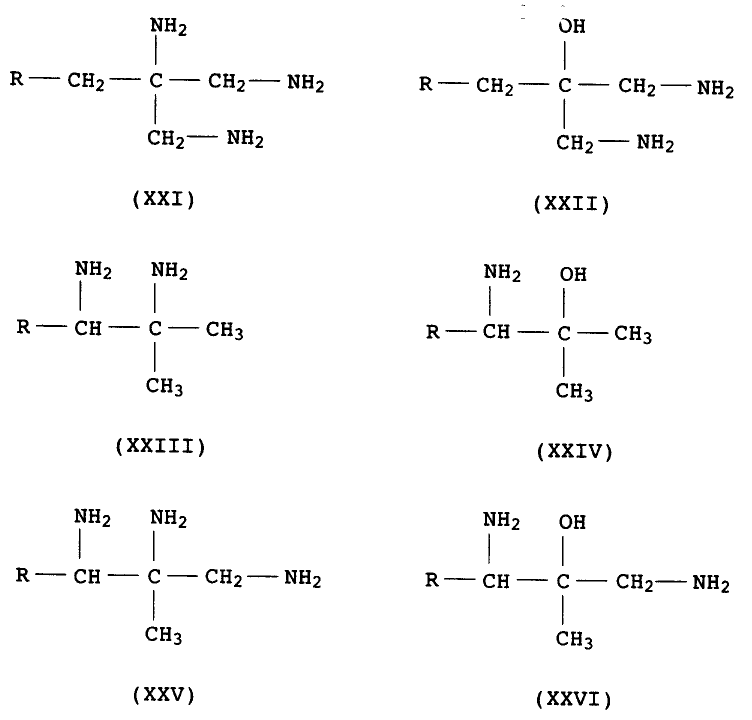 where R is polyisobutyl of the formula 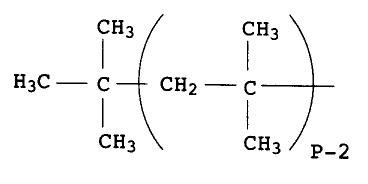 having the degree of polymerization P menioned in claim 1.

11. A process for the preparation of an aminoalkane, which comprises hydrogenating a reaction product of a polyisobutene and oxides of nitrogen or mixures of oxides of nitrogen and oxygen as claimed in claim 1 or 2 after its formation.

12. A reaction product of a polyisobutene and oxides of nitrogen or mixtures of oxides of nitrogen and oxygen as claimed in claim 1 or 2, which, after its formation, has been converted by elimination with bases into nitro-containing alkenes, and then by hydrogenation into aminoalkanes.

13. A reaction product of a polyisobutene and oxides of nitrogen or mixtures of oxides of nitrogen and oxygen as claimed in claim 1 or 2, which, after its formation, has been converted by elimination with bases into nitro-containing alkenes, and then by hydrogenation mainly into aminoalkanes of the structures XXVII and/or XXVIII. 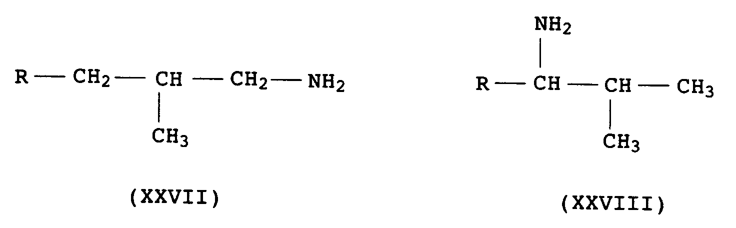 where R is polyisobutyl of the formula 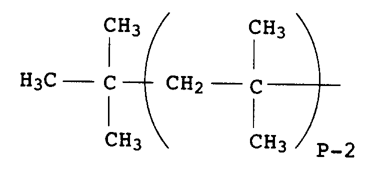 having the degree of polymerization P mentioned in claim 1.

14. A process for the preparation of an aminoalkane, which comprises subjecting a reaction product of a polyisobutene and oxides of nitrogen or mixtures of oxides of nitrogen and oxygen as claimed in claim 1 or 2 after its formation to elimination with bases, and then hydrogenating the nitro-containing alkenes formed.

15. A reaction product of a polyisobutene and oxides of nitrogen or mixtures of oxides of nitrogen and oxygen as claimed in claim 1 or 2, which, after its formation, has been converted by elimination with bases into nitro-containing alkenes and then by addition of amines or alcohols and subsequent hydrogenation or by cleavage to aldehydes and addition of amines onto these aldehydes and subsequent hydrogenation into aminoalkeanes.

16. A reaction product of a polyisobutene and oxides of nitrogen or mixtures of oxides of nitrogen and oxygen as claimed in claim 1 or 2, which, after its formation, has been converted by elimination with bases into nitro-containing alkenes and then by addition of amines of the formula HNR¹R² or alcohols of the formula R¹-OH and subsequent hydrogenation or by cleavage to aldehydes and addition of amines of the formula HNR¹R² onto these aldehydes and subsequent hydrogenation into aminoalkanes, which mainly have one or more of the structures XXIX to XXXIV 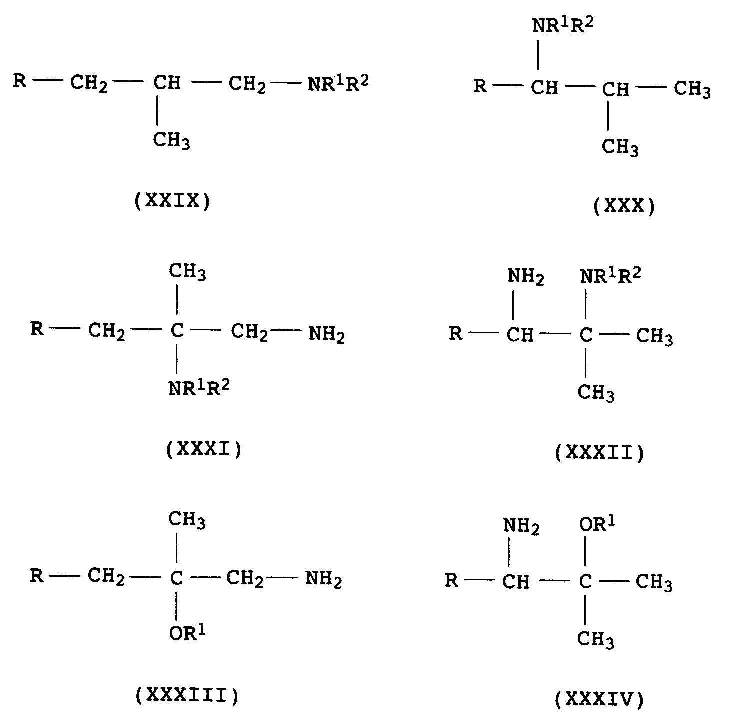 where R is polyisobutyl of the formula 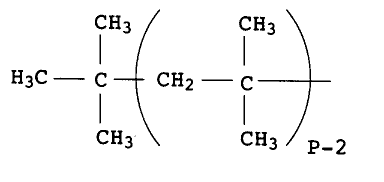 having the degree of polymerization P mentioned in claim 1, and R¹ and R² are C₁-C₃₀alkyl, C₂-C₃₀-alkenyl, C₅-C₈-cycloalkyl, C₇-C₁₈-aralkyl or unsubstituted or substituted C₆-C₁₄-aryl, and R² may furthermore be hydrogen.

17. A process for the preparation of an aminoalkane, which comprises subjecting a reaction product of a polyisobutene and oxides of nitrogen or mixtures of oxides of nitrogen and oxygen as claimed in claim 1 or 2 after its formation to elimination with bases, and then converting the nitro-containing alkenes formed by addition of amines or alcohols and subsequent hydrogenation or by cleavage to aldehydes and addition of amines to these aldehydes and subsequent hydrogenation into aminoalkanes.

18. Use of a reaction product of a polyisobutene and oxides of nitrogen or mixtures of oxides of nitrogen and oxygen as claimed in any of claims 1 to 17 as an additive for fuels and lubricants.

19. A fuel for gasoline engines, containing an effective amount of a reaction product of a polyisobutene and oxides of nitrogen or mixtures of oxides of nitrogen and oxygen as claimed in any of claims 1 to 17.

20. A lubricant containing an effective amount of a reaction product of a polyisobutene and oxides of nitrogen or mixtures of oxides of nitrogen and oxygen as claimed in any of claims 1 to 17.

## Revendications

1. Produits de réaction de polyisobutènes à degré moyen de polymérisation P = 10 à 100, ayant une teneur E = 60 à 90 % en doubles liaisons qui peuvent être mises en réaction avec l'anhydride maléique, E = 100 % correspondant à la valeur théorique obtenue par le calcul pour le cas où chaque molécule du polyisobutène comporterait une double liaison réactive de ce type, avec des oxydes d'azote ou des mélanges d'oxydes d'azote et d'oxygène.

2. Produits de réaction de polyisobutènes et d'oxydes d'azote ou de mélanges d'oxydes d'azote et d'oxygène selon la revendication 1, les polyisobutènes contenant jusqu'à 20 % en poids d'autres monomères en C₄ que l'isobutène et/ou de monomères en C₃ et/ou d'éthylène, en tant que motifs formant le polymère.

3. Produits de réaction de polyisobutènes et d'oxydes d'azote ou de mélanges d'oxydes d'azote et d'oxygène selon la revendication 1 ou 2, sous forme d'un mélange de divers alcanes contenant des groupes nitro, ce mélange contenant comme composants principaux les composés de formules I et II 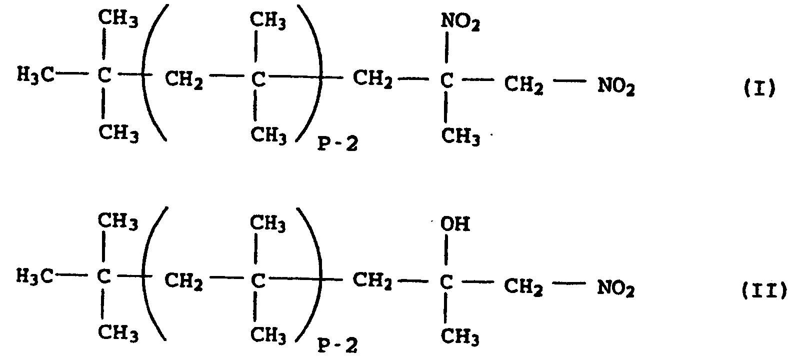 ayant le degré de polymérisation P indiqué dans la revendication 1.

4. Procédé pour la préparation de produits de réaction de polyisobutènes à degré moyen de polymérisation P = 10 à 100, ayant une teneur E = 60 à 90 % en doubles liaisons qui peuvent être mises en réaction avec l'anhydride maléique, E = 100 % correspondant à la valeur théorique obtenue par le calcul pour le cas où chaque molécule du polyisobutène comporterait une double liaison réactive de ce type, avec des oxydes d'azote ou des mélanges d'oxydes d'azote et d'oxygène, caractérisé en ce que l'on fait réagir les polyisobutènes décrits avec les oxydes d'azote à des températures de -30 à +150°C.

5. Procédé pour la préparation de produits de réaction de polyisobutènes et d'oxydes d'azote ou de mélanges d'oxydes d'azote et d'oxygène selon la revendication 4, caractérisé en ce que l'on fait réagir les polyisobutènes avec les oxydes d'azote en un rapport molaire allant de 1:2 à 1:4.

6. Produits de réaction de polyisobutènes et d'oxydes d'azote ou de mélanges d'oxydes d'azote et d'oxygène selon la revendication 1 ou 2, qui, à la suite de leur formation, ont été convertis, par élimination avec des bases, en alcènes contenant des groupes nitro.

7. Produits de réaction de polyisobutènes et d'oxydes d'azote ou de mélanges d'oxydes d'azote et d'oxygène selon la revendication 1 ou 2, qui ont été convertis, à la suite de leur formation, par élimination avec des bases, en alcènes contenant des groupes nitro, qui présentent principalement les structures XVII et/ou XVIII 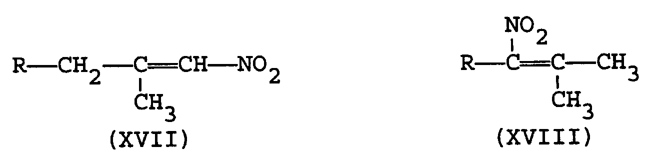 dans lesquelles R représente le radical polyisobutyle de formule 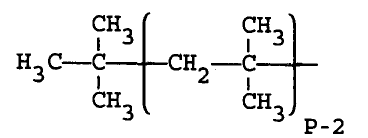 avec le degré de polymérisation P indiqué dans la revendication 1.

8. Procédé pour la préparation d'alcènes contenant des groupes nitro, caractérisé en ce que l'on soumet à une élimination avec des bases des produits de réaction de polyisobutènes et d'oxydes d'azote ou de mélanges d'oxydes d'azote et d'oxygène selon la revendication 1 ou 2, à la suite de leur formation.

9. Produits de réaction de polyisobutènes et d'oxydes d'azote ou de mélanges d'oxydes d'azote et d'oxygène selon la revendication 1 ou 2, qui, à la suite de leur formation, ont été convertis en aminoalcanes par hydrogénation.

10. Produits de réaction de polyisobutènes et d'oxydes d'azote ou de mélanges d'oxydes d'azote et d'oxygène selon la revendication 1 ou 2, qui, à la suite de leur formation, ont été convertis par hydrogénation principalement en un ou plusieurs aminoalcanes de structures XIX à XXVI 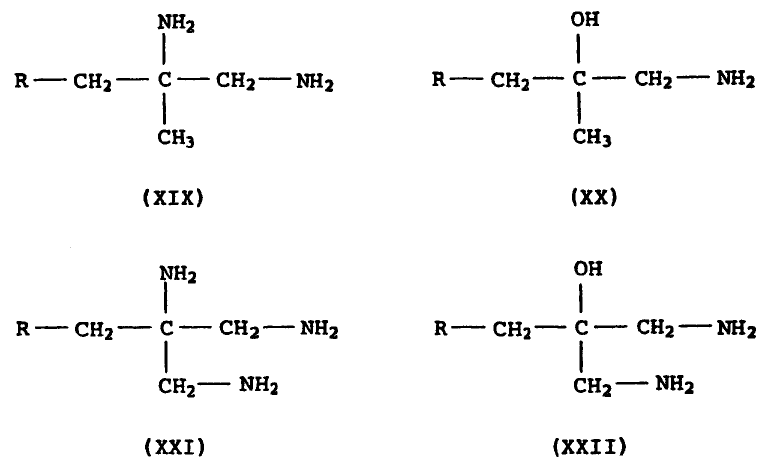 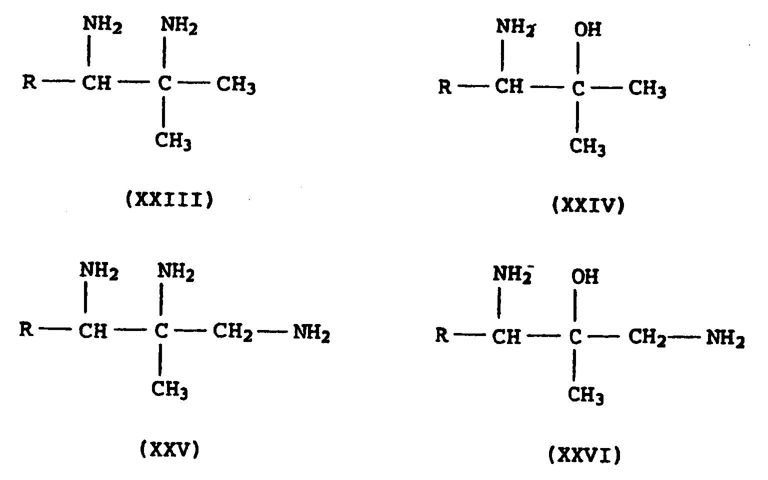 dans lesquelles R représente le radical polyisobutyle de formule 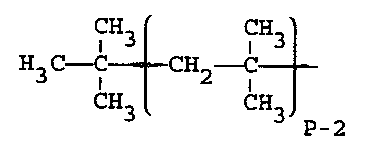 avec le degré de polymérisation P indiqué dans la revendication 1.

11. Procédé pour la préparation d'aminoalcanes, caractérisé en ce que l'on soumet à une hydrogénation des produits de réaction de polyisobutènes et d'oxydes d'azote ou de mélanges d'oxydes d'azote et d'oxygène selon la revendication 1 ou 2, à la suite de leur formation.

12. Produits de réaction de polyisobutènes et d'oxydes d'azote ou de mélanges d'oxydes d'azote et d'oxygène selon la revendication 1 ou 2, qui, à la suite de leur formation, ont été convertis, par élimination avec des bases, en alcènes contenant des groupes nitro, et ensuite, par hydrogénation, en aminoalcanes.

13. Produits de réaction de polyisobutènes et d'oxydes d'azote ou de mélanges d'oxydes d'azote et d'oxygène selon la revendication 1 ou 2, qui, à la suite de leur formation, ont été convertis, par élimination avec des bases, en alcènes contenant des groupes nitro, et ensuite, par hydrogénation, principalement en aminoalcanes de structures XVII et/ou XVIII 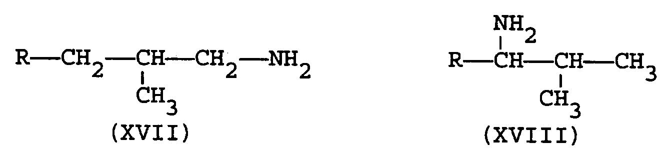 dans lesquelles R représente le radical polyisobutyle de formule 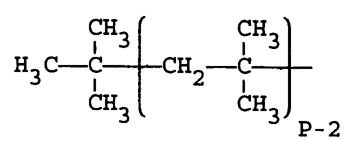 avec le degré de polymérisation P indiqué dans la revendication 1.

14. Procédé pour la préparation d'aminoalcanes, caractérisé en ce que l'on soumet à une élimination avec des bases des produits de réaction de polyisobutènes et d'oxydes d'azote ou de mélanges d'oxydes d'azote et d'oxygène selon la revendication 1 ou 2, à la suite de leur formation, et on soumet ensuite à une hydrogénation les alcènes formés, contenant des groupes nitro.

15. Produits de réaction de polyisobutènes et d'oxydes d'azote ou de mélanges d'oxydes d'azote et d'oxygène selon la revendication 1 ou 2, qui ont été convertis, à la suite de leur formation, par élimination avec des bases, en alcènes contenant des groupes nitro, et ensuite, par addition d'amines ou d'alcools et hydrogénation subséquente ou par dissociation en aldéhydes et addition d'amines sur ces aldéhydes et hydrogénation subséquente, en aminoalcanes.

16. Produits de réaction de polyisobutènes et d'oxydes d'azote ou de mélanges d'oxydes d'azote et d'oxygène selon la revendication 1 ou 2, qui ont été convertis, à la suite de leur formation, par élimination avec des bases, en alcènes contenant des groupes nitro, et ensuite, par addition d'amines de formule HNR¹R² ou d'alcools de formule R¹-OH et hydrogénation subséquente ou par dissociation en aldéhydes et addition d'amines de formule HNR¹R² sur ces aldéhydes et hydrogénation subséquente, en aminoalcanes qui présentent principalement une ou plusieurs des structures XXIX à XXXIV 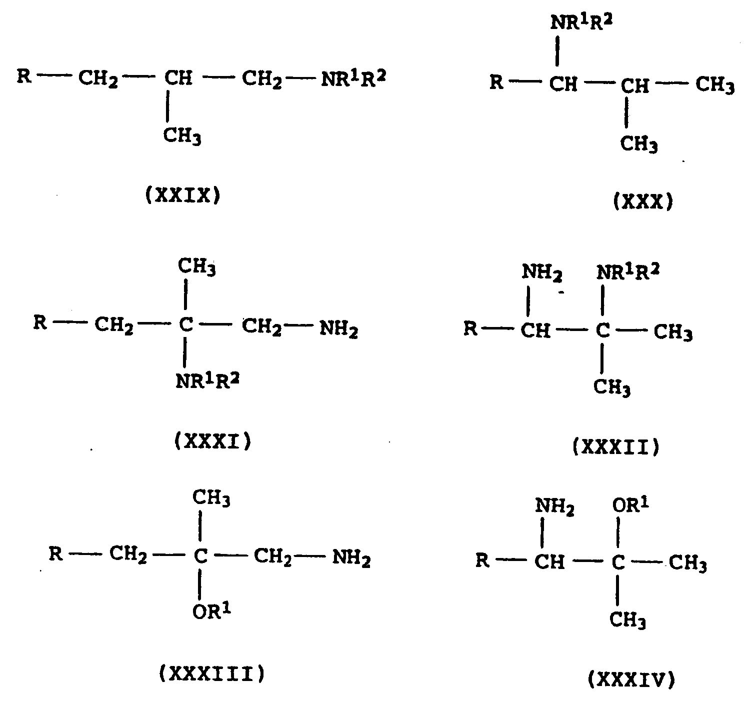 dans lesquelles R représente le radical polyisobutyle de formule 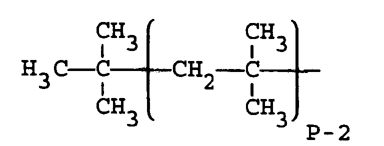 avec le degré de polymérisation P indiqué dans la revendication 1, et R¹ et R² représentent des radicaux alkyle en C₁-C₃₀, alcényle en C₂-C₃₀, cycloalkyle en C₅-C₈, aralkyle en C₇-C₁₈ ou des radicaux aryle en C₆-C₁₄ éventuellement substitués, R² pouvant également représenter un atome d'hydrogène.

17. Procédé pour la préparation d'aminoalcanes, caractérisé en ce que l'on soumet à une élimination avec des bases des produits de réaction de polyisobutènes et d'oxydes d'azote ou de mélanges d'oxydes d'azote et d'oxygène selon la revendication 1 ou 2, à la suite de leur formation, et on convertit ensuite les alcènes formés, contenant des groupes nitro, par addition d'amines ou d'alcools et hydrogénation subséquente, ou par dissociation en aldéhydes et addition d'amines sur ces aldéhydes, et hydrogénation subséquente, en aminoalcanes.

18. Utilisation des produits de réaction de polyisobutènes et d'oxydes d'azote ou de mélanges d'oxydes d'azote et d'oxygène selon les revendications 1 à 17, en tant qu'additifs pour carburants et lubrifiants.

19. Carburant pour moteurs à allumage par étincelle, contenant des quantités efficaces de produits de réaction de polyisobutènes et d'oxydes d'azote ou de mélanges d'oxydes d'azote et d'oxygène selon les revendications 1 à 17.

20. Lubrifiants, contenant des quantités efficaces de produits de réaction de polyisobutènes et d'oxydes d'azote ou de mélanges d'oxydes d'azote et d'oxygène selon les revendications 1 à 17.
